# EUROPÄISCHE PATENTSCHRIFT

(11) **EP 0 779 954 B1**
(45) Veröffentlichungstag und Bekanntmachung des Hinweises auf die Patenterteilung: **27.01.1999**
(21) Anmeldenummer: 95928418.3
(22) Anmeldetag: 07.08.1995
(51) Int. Cl.: F16J 1/16, F02F 3/26

(54) **LEICHTMETALLKOLBEN FÜR HOCHBELASTETE VERBRENNUNGSMOTOREN**
LIGHT-METAL PISTON FOR HIGHLY STRESSED INTERNAL COMBUSTION ENGINES
PISTON EN METAL LEGER POUR MOTEURS A COMBUSTION INTERNE FORTEMENT SOLLICITES

(30) Priorität: 08.09.1994 DE 4431990
(43) Veröffentlichungstag der Anmeldung: 25.06.1997
(73) Patentinhaber: MAHLE GMBH, D-70376 Stuttgart (DE)
(72) Erfinder: ISSLER, Wolfgang, D-71409 Schwaikheim (DE); KOLLOTZEK, Helmut, D-73557 Mutlangen (DE)
(86) Internationale Anmeldenummer: DE9501064
(87) Internationale Veröffentlichungsnummer: WO9607841

(56) Entgegenhaltungen:
- DE-A- 3 036 062
- DE-A- 3 301 366
- DE-A- 4 327 772
- DE-C- 3 609 019
- FR-A- 2 157 319
- US-A- 3 357 318

## Beschreibung

Die Erfindung betrifft einen Leichtmetallkolben für hochbelastete Verbrennungsmotoren nach dem Oberbegriff des Anspruchs 1.

Bei derartigen aus der Praxis bekannten Leichtmetallkolben sind - um die mechanischen, durch den Zünddruck hervorgerufenen Belastungen aushalten zu können - verschiedene Vorkehrungen getroffen worden, um einerseits insbesondere die Durchbiegung des Kolbenbolzens,. die zu Rissen in den Kolbenbolzennaben führen kann, zu verringern und andererseits die Brennraummulde gegen Anrisse zu schützen. Hierzu werden derartige Leichtmetallkolben beispielsweise mit Buchsen in den Bohrungen der Kolbenbolzennaben und die Brennraummulde mit einer zusätzlichen Bewehrung versehen.

Aus der DE-PS 36 09 019 ist zur Vermeidung von Nabenanrissen bekannt, in die Nabenbohrungen jeweils beidseitig taschenförmige Ausnehmungen vom inneren Ende der Nabenbohrungen her einzubringen, die sich über eine gewisse Länge in Nabenbohrungslängsrichtung erstrecken. Eine Verbindung zwischen diesen Ausnehmungen und dem kolbenaußenseitigen Ende der Nabenbohrung wird durch entsprechende Nuten in den Nabenbohrungen sichergestellt.

Aus der US-A-3 357 318 ist ein Leichtmetallkolben für hochbelastete Verbrennungsmotoren bekannt, der aus einem den Kolbenboden mit Brennraummulde und die Ringnutenpartie aufnehmenden Kolbenkopf und einem Kolbenschaft mit integrierten Kolbenbolzennaben besteht, bei dem die Brennraummulde im Kolbenboden unbewehrt ist und die Bohrung jeder Kolbenbolzennabe an ihrem jeweiligen inneren Ende zum inneren Ende hin aufgeweitet ist, sowie die Bohrung jeder Kolbenbolzennabe zwei von ihrem inneren Ende ausgehende schräge Taschen aufweist.

Problem der vorliegenden Erfindung ist es, auf konstruktiv einfache Weise einen Kolben zu finden, bei dem die Spannungen am Rand der Brennraummulde niedrig gehalten werden, ohne dabei die Spannungen in den Kolbenbolzennaben unnötig zu erhöhen.

Gelöst wird dieses Problem mit einem Leichtmetallkolben mit den Merkmalen nach dem Kennzeichen des Anspruchs 1.

Vorteilhafte Ausgestaltungen der Erfindung sind in den Unteransprüchen enthalten.

Die Erfindung ist anhand eines bevorzugten, in der Zeichnung dargestellten Ausführungsbeispiels näher erläutert.

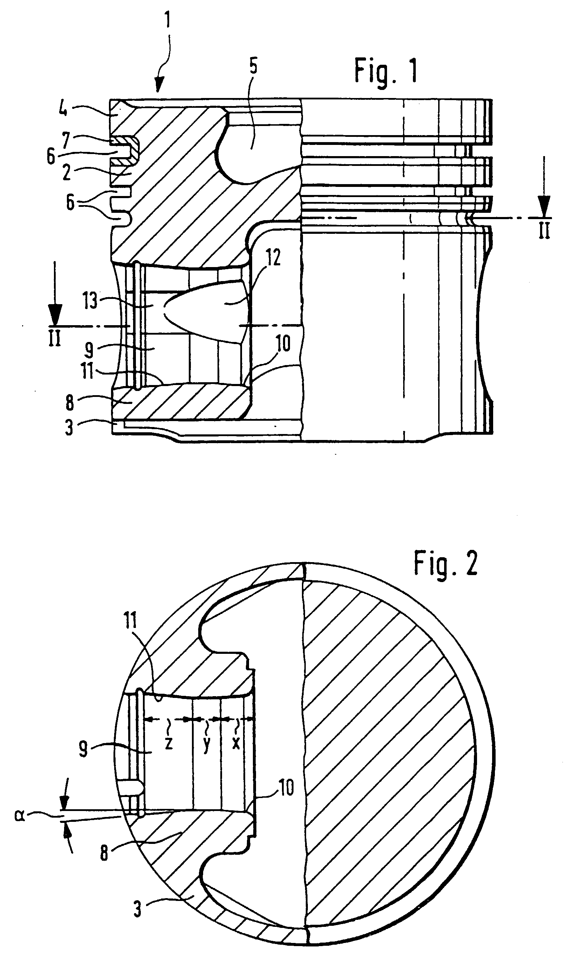

Es zeigen
- Fig. 1: einen erfindungsgemäßen Leichtmetallkolben in Seitenansicht teilweise im Schnitt
- Fig. 2: eine Draufsicht im Schnitt II-II nach Fig. 1

Ein Leichtmetallkolben 1 für einen Verbrennungsmotor, insbesondere hochbelasteter Dieselmotor für ein Kraftfahrzeug, besteht einstückig aus einem Kolbenkopf 2 und einem Kolbenschaft 3. In einem Kolbenboden 4 des Kolbenkopf es 2 sind eine unbewehrte Brennraummulde 5 sowie Ringnuten 6 eingeformt, wobei die oberste Ringnut 6 mit einem Ringträger 7 bewehrt ist. In den Kolbenschaft 3 sind die Kolbenbolzennaben 8 integriert, die zur Aufnahme eines Kolbenbolzens (nicht gezeichnet) Bohrungen 9 aufweisen. Jede Bohrung 9 ist an ihrem inneren Ende 10 in einem Teilbereich X zum inneren Ende hin aufgeweitet (bombiert), wobei die Krümmung dieser Aufweitung als Polygon ausgebildet sein kann. Der Übergang dieser Aufweitung in die Stirnfläche der Nabe erfolgt mit einem Radius von 3 mm, wobei die axiale Länge der Ausrundung in Kolbenbolzenlängsrichtung 1 mm bei einem Kolben mit einem Durchmesser von 80 mm beträgt. Außerdem ist die Bohrung 9 in einem Teilbereich Z als Formbohrung 11 ausgeführt, die sich in dem von außen nach innen verlaufenden, dem tragenden Bereich - der nach außen durch die Nut für den Sicherungsring des Kolbenbolzens begrenzt wird - entsprechenden Teilbereich Z von innen nach außen konisch aufweitet, z.B. trompetenförmig. Die Aufweitung (in der Zeichnung übertrieben groß dargestellt) erfolgt unter einem Winkel Alpha von 5 Minuten. Die Aufweitung, die sich in einem Winkel von 2 - 10 Minuten bewegen soll, kann auch stufenförmig erfolgen, wobei die Aufweitung im weiter innen liegenden Teilbereich Z der Formbohrung 11 einen kleineren Winkel als im weiter außen liegenden Bereich der Formbohrung 11 aufweisen soll.

Zwischen der sich nach außen konisch aufweitenden Formbohrung 11 im Teilbereich Z und der am inneren Ende 10 im Teilbereich X der Bohrung vorgesehenen Aufweitung (Bombierung) weist die Bohrung 9 einen zylindrisch verlaufenden Bereich Y auf.

Weiterhin ist in die Bohrung 9 jeder Kolbenbolzennabe 8 einseitig, und zwar in Richtung Gegendruckseite, eine vom inneren Ende 10 der Bohrung 9 ausgehende schräge taschenförmige Ausnehmung (Tasche 12) eingeformt, die bezüglich ihrer Höhenlage unsymmetrisch zur Kolbenbolzenlängsachse liegt, ihre größte Tiefe am inneren Ende 10 der Bohrung 9 aufweist und nach etwa 2/3 der Länge der Bohrung 9 in die Oberfläche der Formbohrung 11 ausläuft. Eine Verbindung zwischen der schrägen Tasche 12 und dem kolbenaußenseitigen Ende der Bohrung 9 bildet eine in Kolbenbolzenlängsache verlaufende Nut 13.

Mit einer derartigen Ausführung wird auf konstruktiv einfache Weise ein Leichtmetallkolben geschaffen, der durch die Kombination seiner Merkmale einen optimierten Kompromiß bezüglich ertragbarer Spannungen aufgrund erhöhten Zünddrucks für Muldenrand, Abstützung und Kolbenbolzennaben darstellt.

## Patentansprüche

1. Leichtmetallkolben (1) für hochbelastete Verbrennungsmotoren, bestehend aus einem den Kolbenboden (4) mit Brennraummulde (5) und die Ringnutenpartie (6) aufnehmenden Kolbenkopf (2) und einem Kolbenschaft (3) mit integrierten Kolbenbolzennaben (8), wobei
- die Brennraummulde (5) im Kolbenboden (4) unbewehrt ist
- die Bohrung (9) jeder Kolbenbolzennabe (8) wenigstens in einem Teilbereich X der gesamten Nabenbohrungslänge an ihrem inneren Ende (10) zum inneren Ende hin aufgeweitet, insbesondere bombiert ist
- die Bohrung (9) jeder Kolbenbolzennabe (8) zwei von ihrem inneren Ende (10) ausgehende schräge Taschen (12) aufweist
- der bei der Verbrennung entstehende Zünddruck größer als 120 bar ist
dadurch gekennzeichnet,
daß die Bohrung (9) jeder Kolbenbolzennabe (8) als Formbohrung (11) ausgeführt ist, die sich wenigstens in einem von außen nach innen verlaufenden, dem tragenden Bereich entsprechenden Teilbereich Z der gesamten Nabenbohrungslänge von innen nach außen im wesentlichen konisch erweitert.

2. Leichtmetallkolben nach Anspruch 1,
dadurch **gekennzeichnet**,
daß die Krümmung der Aufweitung im Teilbereich X am inneren Ende (10) als Polygon ausgebildet ist.

3. Leichtmetallkolben nach Anspruch 1 oder 2,
dadurch **gekennzeichnet**,
daß die Bohrung (9) der Kolbenbolzennabe (8) im Teilbereich Z von innen nach außen trompetenförmig aufgeweitet ist.

4. Leichtmetallkolben nach einem der vorhergehenden Ansprüche,
dadurch **gekennzeichnet**,
daß die Bohrung (9) der Kolbenbolzennabe (8) im Teilbereich Z eine Aufweitung mit einem Winkel Alpha von 2 - 10 Minuten aufweist.

## Claims

1. Light metal piston (1) for heavily stressed internal combustion engines, comprising a piston head (2) housing the piston base (4) with the combustion chamber trough (5) and the annular groove section (6), and a piston shaft (3) with integrated piston pin bosses (8), wherein
- the combustion chamber trough (5) is non-reinforced in the piston base (4)
- the bore (9) of each piston pin boss (8) is widened, in particular bowed, towards the inner end at least in a part-region X of the entire boss bore length at its inner end (10)
- the bore (9) of each piston pin boss (8) has two inclined cavities (12) extending from its inner end (10)
- the ignition pressure arising upon combustion is greater than 120 bar,
characterised in that the bore (9) of each piston pin boss (8) is constructed as a shaped bore (11), which widens essentially conically from the inside outwards at least in a part-region Z of the entire boss bore length extending inwards from the outside and corresponding to the supporting region.

2. Light metal piston according to Claim 1, characterised in that the curvature of the widened portion in the part-region X at the inner end (10) is in the form of a polygon.

3. Light metal piston according to claim 1 or 2, characterised in that the bore (9) of the piston pin boss (8) widens in a trumpet-like shape from the inside outwards in the part-region Z.

4. Light metal piston according to one of the preceding claims, characterised in that the bore (9) of the piston pin boss (8) has a widened portion with an angle alpha of 2-10 minutes in the part-region Z.

## Revendications

1. Piston en métal léger (1) pour moteurs à combustion interne très chargés, constitué d'une tête (2) recevant le fond de piston (4) avec auge chambre de combustion (5) et la partie à gorges à segments (6), et d'un corps (3) avec moyeux d'axe de piston intégrés (8),
- l'auge chambre de combustion (5) faite dans le fond de piston (4) n'étant pas blindée,
- l'alésage (9) de chaque moyeu d'axe de piston (8) étant, à son extrémité intérieure (10), élargi, en particulier bombé, vers l'extrémité intérieure sur au moins une partie X de sa longueur,
- l'alésage (9) de chaque moyeu d'axe de piston (8) présentant deux poches obliques (12) qui partent de son extrémité intérieure (10),
- la pression d'allumage produite lors de la combustion étant supérieure à 120 bar,
caractérisé par le fait que l'alésage (9) de chaque moyeu d'axe de piston (8) est réalisé sous forme d'alésage profilé (11) qui s'élargit de manière sensiblement conique de l'intérieur vers l'extérieur au moins sur une partie Z de sa longueur s'étendant de l'extérieur vers l'intérieur et correspondant à la partie portante.

2. Piston en métal léger selon la revendication 1, caractérisé par le fait que la courbure de l'élargissement situé dans la partie X à l'extrémité intérieure (10) est formée d'un polygone.

3. Piston en métal léger selon l'une des revendications 1 et 2, caractérisé par le fait que l'alésage (9) du moyeu d'axe de piston (8) est, dans la partie Z, élargi de l'intérieur vers l'extérieur en forme de trompette.

4. Piston en métal léger selon l'une des revendications précédentes, caractérisé par le fait que l'alésage (9) du moyeu d'axe de piston (8) présente dans la partie Z un élargissement ayant un angle alpha de 2 à 10 minutes.
